# EUROPEAN PATENT APPLICATION

(11) **EP 4 510 331 A1**
(43) Date of publication of application: **19.02.2025**
(21) Application number: 22963083.5
(22) Date of filing: 27.10.2022
(51) Int. Cl.: H01M 50/209, H01M 50/244, H01M 50/207

(54) **BATTERY AND ELECTRIC APPARATUS**

(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); ZHAO, Fenggang, Ningde, Fujian 352100 (CN); NIU, Shaojun, Ningde, Fujian 352100 (CN); ZENG, Yuqun, Ningde, Fujian 352100 (CN)
(74) Representative: Ran, Handong
(86) International application number: PCT/CN2022/127963
(87) International publication number: WO 2024/087099

(57) **Abstract**

A battery (1000) and an electric apparatus (2000). The battery (1000) comprises a plurality of battery cells (10), the plurality of battery cells (10) comprising at least one first battery cell (11) and at least one second battery cell (12), wherein the length of the first battery cell (11) is greater than the length of the second battery cell (12), and the first battery cell (11) is adjacent and connected to the second battery cell (12).

## Description

### FIELD

The present application relates to the technical field of batteries, and more particularly, to a battery and an electric device.

### BACKGROUND

In the related art, structural strength of a battery is poor, and structural damage is easily occurred under conditions of battery collisions and the like.

### SUMMARY

An embodiment of the present application provides a battery and an electric device, which improve an overall structural strength and prevent battery cells from being impacted and damaged.

In a first aspect, an embodiment of the present application provides a battery including a plurality of battery cells. The plurality of the battery cells includes at least one first battery cell and at least one second battery cell. A length of the at least one first battery cell is greater than a length of the at least one second battery cell, and the at least one first battery cell is adjacent to and connected to the at least one second battery cell.

In the above technical solution, the length of the first battery cell is greater than the length of the second battery cell and the first battery cell is connected with the adjacent second battery cell, such that the strength of the second battery cell and the overall structural strength of the battery can be improved. Accordingly, stability and a service life of the battery cell are improved, using safety and reliability of the battery are guaranteed, and meanwhile a space utilization rate of an interior of the battery is improved. Moreover, a dimension of the length of the second battery cell can be configured more flexibly, such that using requirements of different batteries are satisfied.

In some embodiments, the at least one first battery cell includes a plurality of the first battery cells formed as at least one first battery row, and the at least one first battery row includes one of the plurality of first battery cells or a plurality of the first battery cells stacked in a thickness direction. In the above technical solution, a structure of the first battery row is more compact, and the connection between the plurality of first battery cells is more reliable to further improve the structural strength.

In some embodiments, the at least one second battery cell includes a plurality of the second battery cells, and the at least one first battery cell is connected to at least two of the plurality of second battery cells. In the above technical solution, the overall structural strength is further improved.

In some embodiments, the plurality of second battery cells is formed as a plurality of second battery rows, and each of the plurality of second battery rows includes a plurality of the second battery cells arranged in a length direction of the plurality of second battery cell; the at least one first battery cell is connected to the second battery cells of the same second battery row; and/or the at least one first battery cell is connected to at least two second battery rows of the plurality of second battery rows. In the above technical solution, arrangement and strength requirements of different battery cells can be met.

In some embodiments, the at least two second battery rows are arranged in a first direction, the length direction of the plurality of second battery cells is a second direction, and the first direction is perpendicular to the second direction. The at least one first battery cell has a length direction parallel to the first direction, and is located between two adjacent ones of the plurality of second battery cells in the plurality of second battery rows. In the above technical solution, the overall structural strength is further improved.

In some embodiments, M second battery rows are arranged in the first direction, and the length of the at least one first battery cell is greater than a total dimension of M-1 second battery rows of the M second battery rows in the first direction. In the above technical solution, it is guaranteed that all the second battery cells of the second battery row can be connected with the first battery cell.

In some embodiments, a thickness direction of the at least one first battery cell is parallel to the second direction. Further, a thickness direction of the plurality of second battery cells is parallel to the first direction; or a thickness direction of the plurality of second battery cells is parallel to a third direction, the first direction and the second direction are both perpendicular to the third direction, and the at least two second battery rows are stacked in the third direction and are connected to an adjacent one of the at least one first battery cells. In the above technical solution, arrangement directions of the first battery cell and the second battery cell are different so that the overall rigidity is further improved.

In some embodiments, the length direction of the plurality of second battery cells is a second direction, and a length direction of the at least one first battery cell is parallel to the second direction. The at least one first battery cell and the plurality of second battery rows are stacked and connected to each other in a first direction or a third direction, and the first direction, the second direction, and the third direction are perpendicular to each other. In the above technical solution, the first battery cell can be connected with a plurality of the second battery cells of the same second battery row to improve the structural strength in the second battery row.

In some embodiments, the plurality of second battery rows includes N second battery cells, and the length of the at least one first battery cell is greater than a total length of N-1 second battery cells of the N second battery cells. In the above technical solution, it is guaranteed that each of the second battery cells can be connected with the first battery cell.

In some embodiments, at least two second battery rows of the plurality of second battery rows are arranged on the same side of the at least one first battery cell in the first direction, and the at least two second battery rows are stacked in the third direction; and/or the second battery rows are arranged on at least one side of the at least one first battery cell in the first direction and on at least one side of the at least one first battery cell in the third direction, respectively. In the above technical solution, the first battery cell can be connected with at least two second battery rows, such that the overall rigidity is further improved.

In some embodiments, a thickness direction of the plurality of second battery cells is parallel to or perpendicular to a thickness direction of the at least one first battery cell. In the above technical solution, the arrangement of the first battery cell and the second battery cell is compact, or different arrangements are employed to improve the overall rigidity.

In some embodiments, the at least one first battery cell is respectively provided with an electrical connection portion on two sides of the at least one first battery cell in a length direction of the at least one first battery cell, and each of the plurality of second battery rows is respectively provided with an electrical connection portion on two sides of the second battery row in a length direction of the second battery row. The electrical connection portion arranged on one of the two sides of the second battery row is connected to one of the electrical connection portions of the at least one first battery cell through an electrical connection member. The electrical connection portion arranged on another one of the two sides of the second battery row is connected to another one of the electrical connection portions of the at least one first battery cell through an electrical connection member. In the above technical solution, the first battery cell has electric connection and adapting functions such that extra adapting structures such as a busbar sheet can be omitted.

In some embodiments, the second battery row includes two second battery cells, and the two second battery cells are provided with the electrical connection portion on two sides thereof facing away from each other, respectively; or the second battery row includes at least two second battery cells, each of the at least two second battery cells is respectively provided with the electrical connection portion on two sides thereof in the length direction of the second battery cell, and the electrical connection portions, opposite to each other, of two adjacent ones of the at least two second battery cells are connected to each other. In the above technical solution, the plurality of second battery cells of the second battery row are mutually supported, such that the overall rigidity is improved.

In some embodiments, at least one battery cell of the plurality of battery cells is a battery cell without a discharging platform. In a discharging curve of the at least one battery cell without the discharging platform, within a discharging capacity interval of 5% to 95%, each discharging capacity of 5% is a value point, and a slope of a connecting line of two adjacent value points is greater than or equal to 1. In the above technical solution, the battery cell without the discharging platform is employed to improve detection accuracy of electric quantity.

In some embodiments, the at least one battery cell is a battery cell with a discharging platform, and a slope of a connecting line of two adjacent value points in a discharging curve of the one battery cell with the discharging platform is smaller than 1. In the above technical solution, the battery cell with the discharging platform is employed to improve the endurance ability of the battery.

In some embodiments, the at least one first battery cell is the battery cell with the discharging platform, and the second battery cell is the battery cell without the discharging platform. In the above technical solution, the safety, the electric quantity detection accuracy and the endurance ability are achieved.

In some embodiments, at least two of the plurality of battery cells have different thermal runaway temperature thresholds. In the above technical solution, the battery cell with a relatively high thermal runaway temperature threshold can be used as a heat insulation barrier to prevent thermal runaway diffusion.

In some embodiments, a thermal runaway temperature threshold of the at least one first battery cell is higher than a thermal runaway temperature threshold of the at least one second battery cell. In the above technical solution, the safety of the first battery cell is higher, which is beneficial to reduce processing difficulty, and the effect to prevent thermal runaway diffusion is better.

In some embodiments, the at least one first battery cell is a lithium iron phosphate battery cell, and the at least one second battery cell is a ternary battery cell. In the above technical solution, the safety, the electric quantity detection accuracy and the endurance ability are achieved.

In some embodiments, each of the plurality of battery cells each is provided with a pressure relief portion and an electrical connection portion, and the pressure relief portion and the electrical connection portion are arranged on different sides of the battery cell. In the above technical solution, fire explosion caused by an extremely high temperature of the electrical connection portion can be avoided during the thermal runaway pressure relief.

In a second aspect, an embodiment of the present application provides an electric device including the battery described above, and the battery is configured to provide electric energy to the electric device.

### BRIEF DESCRIPTION OF DRAWINGS

FIG. 1 is a view of a battery along a third direction according to a first embodiment of the present application.
FIG. 2 is a view of a battery along a third direction according to a second embodiment of the present application.
FIG. 3 is a view of the battery of FIG. 2 viewed along a second direction.
FIG. 4 is a view of a battery along a third direction according to a third embodiment of the present application.
FIG. 5 is a view of a battery along a third direction according to a fourth embodiment of the present application.
FIG. 6 is a view of the battery of FIG. 5 viewed along a second direction.
FIG. 7 is a view of a battery along a third direction according to a fifth embodiment of the present application.
FIG. 8 is a view of the battery of FIG. 7 viewed along a second direction.
FIG. 9 to FIG. 11 are schematic diagrams of battery cells according to three embodiments of the present application.
FIG. 12 is a schematic diagram of an electric device according to some embodiments of the present application.

### Reference Signs:

battery 1000; electric device 2000;
battery cell 10; first battery cell 11; second battery cell 12; electrical connection portion 13; pressure relief portion 14;
first battery row 21; second battery row 22;
case 40;
first direction F1, second direction F2, and third direction F3.

### DESCRIPTION OF EMBODIMENTS

In order to make objectives, technical solutions and advantages of the embodiments of the present application clearer, the technical solutions in the embodiments of the present application are clearly described below in conjunction with the drawings in the embodiments of the present application. Obviously, the described embodiments are some embodiments of the present application rather than all embodiments. Based on the embodiments of the present application, all other embodiments obtained by those skilled in the art without creative efforts shall fall within the scope of the present application.

Unless otherwise defined, all technical and scientific terms used in the present application have the same meaning as commonly understood by those skilled in the art of the present application. The terms used in the description of the present application are only for the purpose of describing specific embodiments and are not intended to limit the present application. The terms "include" and "have" as well as any variations thereof in the specification, claims or the description of the accompanying drawings of the present application are intended to cover non-exclusive inclusion. The terms "first", "second" and the like in the specification, claims or the description of the accompanying drawings of the present application are used for distinguishing different objects, but are not used for describing a specific sequence or a primary and secondary relationship.

The "embodiment" in the present application means that a particular feature, structure, or characteristic described in connection with an embodiment may be included in at least one embodiment of the present application. The appearances of this phrase in various positions in the specification are not necessarily all referring to the same embodiment, nor are independent or alternative embodiments mutually exclusive of other embodiments.

In the description of the present application, it should be noted that unless otherwise specified and limited, terms "mount", "communicate", "connect" and "attach" should be understood in a broad sense, for example, it may be fixedly connected or detachably connected, or integrally connected; and it may be directly connected or indirectly connected by means of an intermediate medium, and it may be communication of two internal elements. For those skilled in the art, the specific meaning of the term in the present application can be understood according to specific conditions.

A term "and/or" in the present application is merely an association relationship describing associated objects, and indicates that there may be three relationships. For example, A and/or B may indicate three cases as below: A exists alone, A and B exist at the same time, and B exists alone. In addition, a character "/" in the present application generally indicates that former and later associated objects are in an "or" relationship.

In the embodiments of the present application, the same reference signs refer to the same component, and for the sake of being concise, a detailed description of the same component is omitted in different embodiments. It should be understood that dimensions, such as thickness, length and width, of various components in the embodiments of the present application shown in the drawings, and dimensions such as overall thickness, length and width of an integrated device are merely illustrative and should not limit the present application.

In the present application, "a plurality of" means more than two (including two).

In the present application, a battery refers to a single physical module that includes one or more battery cells to provide relatively high voltage and capacity. For example, the battery mentioned in the present application may include a battery module, a battery pack, or the like. Some batteries may include a case for encapsulating one or more battery cells or a plurality of battery modules. The case can prevent liquid or other impurity substance from affecting charging or discharging of the battery cell. Further, it is possible that some batteries may do not include the case and are directly arranged in a battery installation cabin of an electric device.

In the present application, the battery cell may include a lithium-ion secondary battery, a lithium-ion primary battery, a lithium-sulfur battery, a sodium lithium-ion battery, a sodium-ion battery, a magnesium-ion battery, or the like, which is not limited in the embodiments of the present application. The battery cell may be a cylinder, a flat body, a cuboid, or other shapes, which is not limited in the embodiments of the present application. The battery cell is generally divided into three types based on a packaging manner, i.e., a cylindrical battery cell, a square battery cell, and a soft package battery cell, which is not limited in the embodiments of the present application.

For example, the battery cell may include a shell, an electrode assembly, and an electrolytic solution, and the shell is used to accommodate the electrode assembly and the electrolytic solution. The electrode assembly includes a positive electrode plate, a negative electrode plate, and a separator. The battery cell operates mainly based on moving of metal ions between the positive electrode plate and the negative electrode plate. The positive electrode plate includes a positive electrode current collector and a positive electrode active material layer, and the positive electrode active material layer is coated on a surface of the positive electrode current collector. A part of the positive electrode current collector that is not coated with the positive electrode active material layer protrudes from a part of the positive electrode current collector coated with the positive electrode active material layer, and the part of the positive electrode current collector that is not coated with the positive electrode active material layer is used as a positive tab. As taking a lithium-ion battery as an example, a material of the positive electrode current collector may be aluminum, and the positive electrode active material may be lithium cobalt oxide, lithium iron phosphate, ternary lithium, lithium manganate or the like.

The negative electrode plate includes a negative electrode current collector and a negative electrode active material layer, and the negative electrode active material layer is coated on a surface of the negative electrode current collector. A part of the negative electrode current collector that is not coated with the negative electrode active material layer protrudes from a part of the negative electrode current collector coated with the negative electrode active material layer, and the part of the negative electrode current collector that is not coated with the negative electrode active material layer is used as a negative tab. A material of the negative electrode current collector may be copper, and the negative electrode active material may be carbon, silicon or the like. In order to ensure that fusing is not occurred when a large current passes through, a plurality of the positive tabs is provided and stacked together, and a plurality of the negative tabs is provided and stacked together.

A material of the separator may be PP (polypropylene), PE (polyethylene) or the like. In addition, the electrode assembly may be a wound structure or a stacked structure, and the embodiments of the present application are not limited thereto.

The battery cell may be provided with an electrode terminal and the like, which is connected with the tab to serve as an electrical connection portion of the battery cell. Moreover, the battery cell may have a pressure relief portion. When an internal pressure of the battery cell is too large (for example, thermal runaway), the pressure relief portion is used for releasing internal substances (such as, gas, liquid, and particulate matters) of the battery cell, in order to reduce the internal pressure of the battery cell. This can avoid dangerous accidents such as deflagration of the battery cell caused by too fast pressurization inside the battery cell. For example, the pressure relief portion is an explosion-proof valve, an explosion-proof sheet and the like.

For example, in an electric device of some related technologies, a battery is used for supplying power, the battery includes a casing and a battery cell, and the casing includes an upper casing and a lower casing. The structural strength of the battery cell is relatively poor, and particularly, the structural strength of the battery cell with a relatively small dimension is relatively poor, resulting in that the overall structural strength of the battery is relatively poor. For example, when a collision occurs, the battery cell and the adjacent component or the case are prone to collision and damage.

In order to solve the problem of poor structural strength of the battery cell, the inventor found that the structure of the battery could be improved to increase the structural strength of the battery.

Based on this, after research, the inventor provides a battery 1000 including a plurality of battery cells 10, and the plurality of battery cells 10 includes at least one first battery cell 11 and at least one second battery cell 12. A length of the first battery cell 11 is greater than a length of the second battery cell 12, and the first battery cell 11 is adjacent to and connected to the second battery cell 12.

In the battery 1000 having such a structure, the first battery cell 11 with a relatively long length has a relatively high structural strength, and the second battery cell 12 with a relatively short length has a relatively low structural strength. The first battery cell 11 and the second battery cell 12 are connected to each other such that the first battery cell 11 can enhance the structural strength of the second battery cell 12, thereby improving the overall structural strength of the battery 1000 and preventing the battery cell 10, especially the second battery cell 12, from being easily damaged by impact. Moreover, the overall structural strength of the battery 1000 can be improved without additionally arranging a reinforcing structure due to the characteristics of the battery cell 10, and the structure of the battery 1000 can be simplified.

The battery 1000 disclosed in the embodiment of the present application can be used in, but not limited to, an electric device 2000 such as a vehicle, a ship, or an aircraft, such that the battery 1000 and the like disclosed in the present application can form a power supply system of the electric device 2000 to ensure the using safety and reliability of the electric device 2000.

For example, the electric device 2000 disclosed in the embodiment of the present application may be, but is not limited to, a vehicle, a mobile phone, a tablet, a notebook computer, a ship, a spacecraft, an electric toy, an electric tool, and the like. The vehicle may be a fuel vehicle, a gas vehicle, a new energy vehicle, or a rail vehicle. The new energy vehicle may be an electric vehicle, a hybrid electric vehicle, or an extended-range electric vehicle. The spacecraft includes an airplane, a rocket, an aircraft, a spaceship, and the like. The electric toy includes a fixed or movable electric toy, such as a game machine, an electric vehicle toy, an electric ship toy, and an electric plane toy. The electric tool includes an electric metal cutting tool, an electric grinding tool, an electric assembling tool, and an electric railway tool, such as an electric drill, an electric grinding machine, an electric wrench, an electric screwdriver, an electric hammer, an impact electric drill, a concrete vibrator, and an electric planer.

Hereinafter, the battery 1000 according to an embodiment of the present application is described with reference to the drawings.

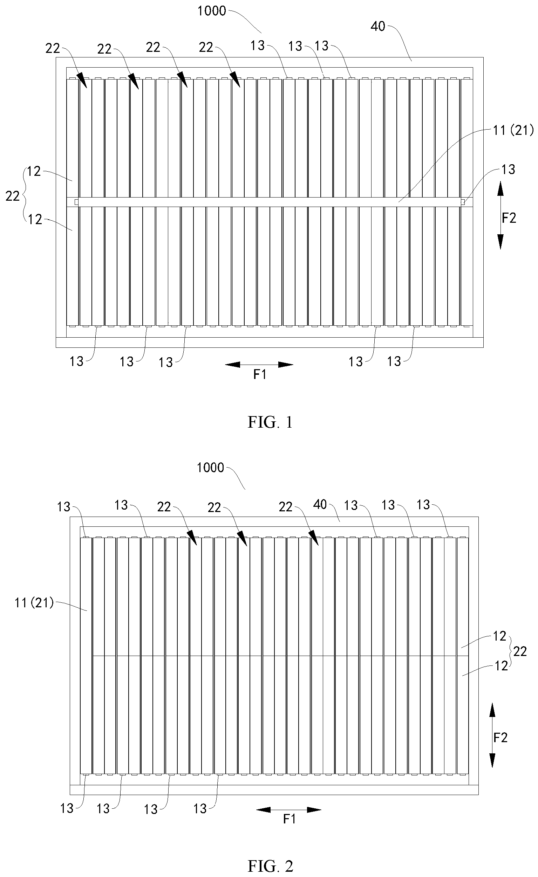

As shown in FIGS. 1 to 11, the battery 1000 includes a plurality of battery cells 10. The plurality of battery cells 10 includes at least one first battery cell 11 and at least one second battery cell 12, and a length of the first battery cell 11 is greater than a length of the second battery cell 12. The first battery cell 11 is adjacent to and connected to the second battery cell 12.

The plurality of battery cells 10 includes the at least one first battery cell 11 and the at least one second battery cell 12. That is, the number of the battery cells 10 is two or more. When two battery cells 10 are provided, the two battery cells 10 are the first battery cell 11 and the second battery cell 12, respectively. When more than two battery cells 10 are provided, the number of the first battery cell 11 is one or more, and the number of the second battery cell 12 is one or more.

The length of the first battery cell 11 is greater than the length of the second battery cell 12. The battery cell 10 has a length, a width, and a thickness, the length of the battery cell 10 is greater than the width thereof, and the width of the battery cell 10 is greater than the thickness thereof. The first battery cell 11 is longer in length than the second battery cell 12. For example, the length of the first battery cell 11 is greater than or equal to 140 mm, and the length of the second battery cell 12 is smaller than 140 mm. It should be noted that the length, the width and the thickness of the battery cell 10 described herein refer to dimensions of the housing of the battery cell 10, but does not include dimensions of protruding structures of the housing, such as an electrical connection portion 13.

The longer the length of the battery cell 10 is, the higher the structural strength is. The shorter the length is, the poorer the structural strength is, but it can meet requirements of a relatively small installation space, a small capacity, low difficulties of processing technology of the battery cell 10, avoiding an electrode plate from being too long, great polarization, and power performance from being low, and the like.

The first battery cell 11 and the second battery cell 12 are adjacent and connected to each other. That is, there is no other battery cell 10 provided between the first battery cell 11 and the second battery cell 12 so that the first battery cell 11 and the second battery cell 12 are adjacent to each other. The first battery cell 11 and the second battery cell 12 adjacent to this first battery cell 11 may be in contact with each other and spaced apart by a relatively small gap. The first battery cell 11 and the adjacent second battery cell 12 are connected to each other, such that the first battery cell 11 and the second battery cell 12 are integrally formed, and the structural strength of the second battery cell 12 is improved by means of the first battery cell 11. Therefore, the length of the second battery cell 12 is configured more flexibly, and the second battery cell 12 fits with the first battery cell 11 such that situations of poor structural strength and easy damage are not prone to occurring, to achieve easier machining, less polarization of the electrode plate, and high power performance of the second battery cell 12.

In addition, the connection of first battery cell 11 and the second battery cell 12 can improve the overall structural strength, such that an additional reinforcing structure can be omitted and the space occupied by the reinforcing structure is reduced, thereby increasing a space utilization rate of an interior of the battery 1000 and making the structure more compact. Further, the battery 1000 may be additionally provided with a reinforcing structure based on actual requirements, and the reinforcing structure is combined with the connection of the long battery cell 10 and the short battery cell 10 in the embodiments of the present application to further improve the overall structural strength of the battery 1000.

It should be noted that, in an embodiment where a plurality of the first battery cells 11 is provided, at least one of the plurality of first battery cells 11 is connected to the second battery cell 12. Alternatively, in an embodiment where a plurality of the second battery cells 12 is provided, at least one of the plurality of second battery cells 12 is connected to the first battery cell 11. The above embodiments are both within the scope of the present application.

The connection manner of the first battery cell 11 and the second battery cell 12 is not specially defined in the present application, and the first battery cell 11 and the second battery cell 12 may be directly connected or connected through other components. For example, the first battery cell 11 and the second battery cell 12 are connected to each other through a manner, such as an adhesive layer, welding, a fastener, and a square frame. The adhesive layer can adhere two opposite surfaces of the first battery cell 11 and the second battery cell 12 to realize connection and fixing. The fastener can fasten and connect the housing of the first battery cell 11 to the housing of the second battery cell 12, or fasten and connect a tab on the housing of the first battery cell 11 to a tab on the housing of the second battery cell 12, etc. The square frame is in annular shape so that the first battery cell 11 and the second battery cell 12 can be surrounded and tightly wrapped to realize the connection of the first and second battery cells.

As for the battery 1000 according to the embodiment of the present application, the length of the first battery cell 11 is configured to be greater than the length of the second battery cell 12, and the first battery cell 11 is connected to the adjacent second battery cell 12. In this way, the strength of the second battery cell 12 and the overall structural strength of the battery 1000 can be improved, the stability and the service life of the battery cell 10 are improved, the using safety and reliability of the battery 1000 are ensured, and meanwhile, it is beneficial to improve the space utilization rate of the interior of the battery 1000. Moreover, the dimension of the second battery cell 12 in the second direction F2 is configured more flexibly to meet the using requirements of different batteries 1000. When the battery 1000 of the embodiment of the present application is used in the electric device 2000, a power supply system of the electric device 2000 can employ the battery 1000 of the present application, such that the using safety and reliability of the electric device 2000 can be improved.

In some embodiments, as shown in FIGS. 1 to 3 and 5 to 6, one first battery cell 11 is provided.

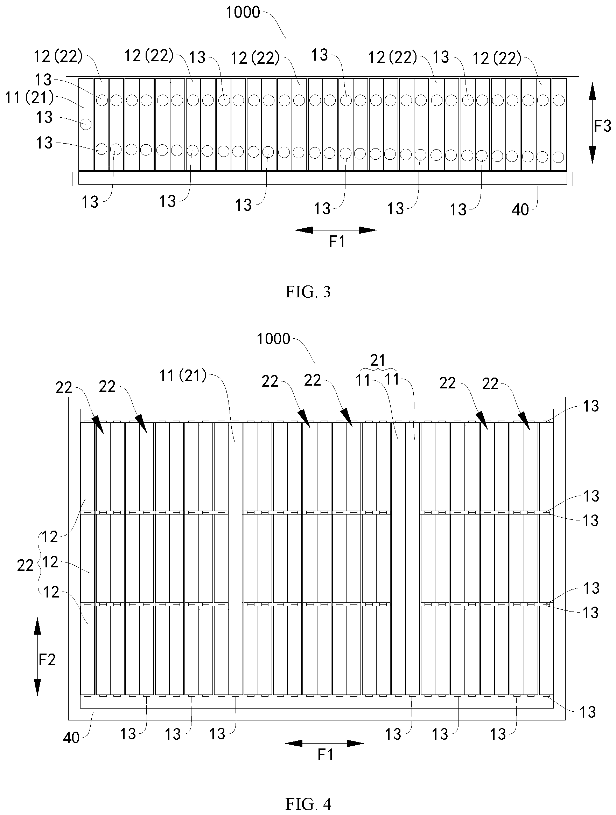

In some other embodiments, as shown in FIGS. 4, 7 and 8, a plurality of first battery cells 11 is provided and is formed as at least one first battery row 21, and the at least one first battery row 21 includes one first battery cell 11 or a plurality of the first battery cells 11 stacked in a thickness direction.

The at least one first battery row 21 includes one first battery cell 11 or a plurality of the first battery cells 11 stacked in the thickness direction. In other words, when the plurality of first battery cells 11 is arranged to be adjacent to each other, they are arranged to be stacked in the thickness direction of the plurality of first battery monomer 11, such that the structure of the at least one first battery row 21 more compact and the connection between the plurality of first battery cells 11 is more reliable to further improve the structural strength.

For example, as shown in FIG. 4, the battery 1000 includes three first battery cells 11 that are formed as two first battery rows 21, two sides of each of the two first battery rows 21 are provided with a second battery cell 12, respectively. One of the two first battery rows 21 includes one first battery cell 11, and the other of the two first battery rows 21 includes two first battery cells 11.

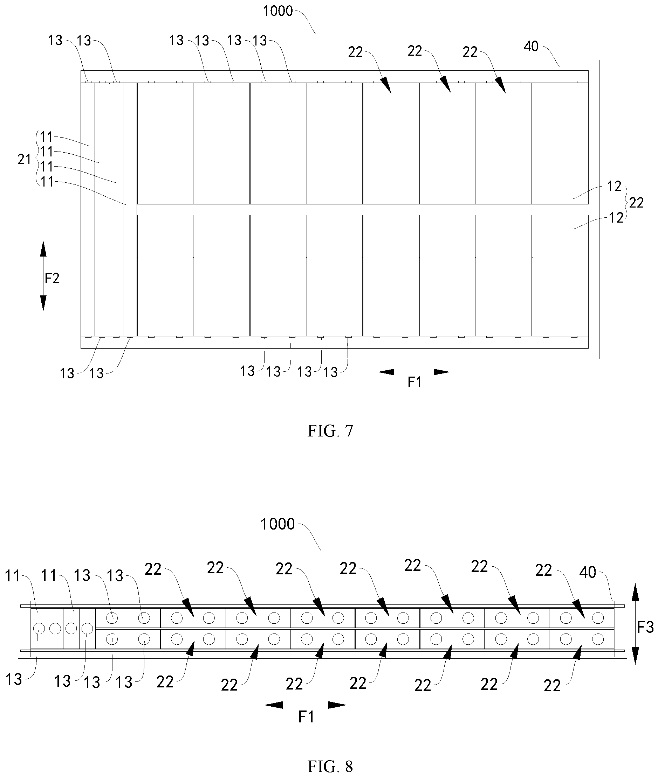

For another example, as shown in FIGS. 7 and 8, the battery 1000 includes four first battery cells 11, and the four first battery cells 11 are stacked in the thickness direction thereof to form one first battery row 21.

In some embodiments of the present application, as shown in FIGS. 1 to 8, a plurality of second battery cells 12 are provided, and the first battery cell 11 is connected to at least two of the plurality of second battery cells 12. Therefore, the first battery cell 11 can connect the plurality of second battery cells 12 into one piece, such that the structural strength of the battery 1000 is further improved and the anti-impact capacity is improved.

It should be noted that the above embodiments are not limitation to all the first battery cells 11. That is, a part of the first battery cells 11 can be connected to at least two of the plurality of second battery cells 12, and another part of the first battery cells 11 can be only connected to one of the plurality of second battery cells 12 or not directly connected to the second battery cell 12. For example, as shown in FIGS. 7 and 8, in the four first battery cells 11, one of the four first battery cells 11 is connected to four adjacent second battery cells 12, and the other three first battery cells 11 are not directly connected to the second battery cell 12. The four first battery cells 11 are connected into an integral component, to improve the overall structural strength of the battery 1000 by improving the structural strength of the one first battery cell 11 connected to the second battery cell 12.

According to some embodiments of the present application, as shown in FIGS. 1 to 8, the plurality of second battery cells 12 is formed as a plurality of second battery rows 22, and each of the plurality of second battery rows 22 includes a plurality of the second battery cells 12 arranged in a length direction of the plurality of second battery cells 12.

Therefore, the battery 1000 may include one second battery row 22 or a plurality of second battery rows 22. The number of the second battery rows 22 and the number of the second battery cells 12 of each of the second battery rows 22 is adjustable such that it is beneficial for meeting requirements of different batteries 1000 on voltages, capacitors, dimensions and the like. In some embodiments where a plurality of second battery rows 22 are provided, the plurality of second battery rows 22 may be arranged in a width direction or a thickness direction of the second battery cell 12 to meet space arrangement requirements.

In addition, in some embodiments, as shown in FIGS. 2 to 8, the first battery cell 11 is connected to second battery cells 12 of the same second battery row 22. That is, the first battery cell 11 connects the plurality of second battery cells 12 arranged in the length direction, to cause the second battery row 22s to form into one piece, which further improves the structural strength.

In some embodiments, as shown in FIG. 1, the first battery cell 11 is connected to at least two second battery rows 22. That is, the first battery cell 11 connects the at least two second battery rows 22 into one piece, and the structural strength can also be further improved.

In some embodiments, the first battery cell 11 is connected to second battery cells 12 of the same second battery row 22, and the first battery cell 11 is connected to at least two second battery rows 22, to further improve the overall strength of the battery 1000.

In some specific embodiments, the plurality of second battery rows 22 are directly connected to each other, and the plurality of first battery cells 11 are connected into one piece, for example, through an adhesive layer, to further improve the overall structural strength of the battery 1000.

In some embodiments, as shown in FIG. 1, at least two second battery rows 22 are arranged in a first direction F1, the length direction of the second battery cells 12 is a second direction F2, and the first direction F1 is perpendicular to the second direction F2. That is to say, the first direction F1 may be parallel to the width direction or the thickness direction of the second battery cells 12, and the at least two second battery rows 22 are stacked in the width direction or the thickness direction of the second battery cells 12, such that a dimension of the whole battery 1000 in a three-dimensional direction is more reasonable, which is beneficial for improving the space utilization rate of the interior of the battery 1000.

With continued reference to FIG. 1, the at least one first battery cell 11 has the length direction parallel to the first direction F1, and is located between two adjacent second battery cells 12 of the at least two second battery rows 22.

That is, the at least one first battery cell 11 extends in the arrangement direction of the plurality of second battery rows 22, the at least one first battery cell 11 separates the two adjacent second battery cells 12 of the second battery rows 22, and the at least one first battery cell 11 is connected to the two adjacent second battery cells 12 at two sides thereof, respectively.

Therefore, the first battery cell 11 can connect the two second battery cells 12 of the same second battery row 22 together in the second direction F2, to form a three-layer structure composed of the second battery cell 12, the first battery cell 11, and the second battery cell 12, and the plurality of second battery rows 22 are connected to each other in the first direction F1. In this way, the overall structure of the battery cell 10 in the first direction F1 and the second direction F2 is more stable. In addition, the length directions of the first battery cell 11 and the second battery cell 12 are perpendicular to each other, that is, different arrangements can improve the overall rigidity of the battery 1000.

In some embodiments, as shown in FIG. 1, the number of the second battery rows 22 arranged in the first direction F1 is M, and the length of the first battery cell 11 is greater than a sum of dimensions of M-1 second battery rows 22 in the first direction F1.

In other words, in the M second battery rows 22, two adjacent second battery cells 12 of each second battery row 22 are separated by the first battery cell 11 and connected through the first battery cell 11, thereby ensuring that the first battery cell 11 can realize the connection of the M second battery rows 22, and ensuring that the connection of the second battery cells 12 of the M second battery rows 22 can be realized. Accordingly, the integrity of the battery 1000 is relatively high.

In some embodiments of the present application, as shown in FIG. 1, the thickness direction of the first battery cell 11 is parallel to the second direction F2. In this way, when the first battery cell 11 separates two adjacent second battery cells 12, a surface at a side of the first battery cell 11 in the thickness direction that has a relatively large area fits with the second battery cell 12, such that the supporting and position-limiting to the second battery cells 12 are more reliable, and the first battery cell 11 occupies a relatively small space in the second direction F2.

As shown in FIG. 1, the thickness direction of the second battery cell 12 is parallel to the first direction F1. That is, the plurality of second battery rows 22 are stacked in the thickness direction of the second battery cells 12, such that the arrangement of the plurality of second battery rows 22 is compact to reduce the occupied space in the first direction F1. Moreover, the width direction of the second battery cell 12 is along the third direction F3, such that the thickness of the whole battery 1000 in the third direction F3 can be reduced. The first direction F1 and the second direction F2 are both perpendicular to the third direction F3. In addition, the thickness directions of the first battery cell 11 and the second battery cell 12 are perpendicular to each other to further improve the overall rigidity.

In an embodiment, the thickness direction of the second battery cell 12 is parallel to the third direction F3, and the first direction F1 and the second direction F2 are both perpendicular to the third direction F3. The at least two second battery rows 22 are stacked in the third direction F3, and each of the at least two second battery rows is connected with an adjacent first battery cell 11. That is, the at least two second battery rows 22 form a multi-layer structure in the third direction F3, to facilitate to adjust the overall thickness of the battery 1000 by adjusting the number of layers of the at least two second battery rows 22. In addition, two layers of the at least two second battery rows 22 may be connected to each other through the first battery cell 11 to be formed into one piece, to facilitate to improve the overall rigidity. Further, the width directions of the first battery cell 11 and the second battery cell 12 are perpendicular to each other, such that the overall rigidity can be further improved.

In some embodiments of the present application, as shown in FIGS. 2 to 8, the length direction of the second battery cell 12 is the second direction F2. The length direction of the at least one first battery cell 11 is parallel to the second direction F2, that is, the first battery cell 11 and the second battery cell 12 are arranged in parallel to each other.

Moreover, the at least one first battery cell 11 and the second battery rows 22 are stacked in the first direction F1 or the third direction F3 and connected to each other, and the first direction F1, the second direction F2 and the third direction F3 are perpendicular to each other. Therefore, the at least one first battery cell 11 and the second battery rows 22 are formed into a multi-layer structure to improve the overall rigidity. Moreover, the at least one first battery cell 11 can connect the plurality of second battery cells 12 of the second battery rows 22 together, to improve the structural strength within the second battery rows 22.

In some embodiments, the second battery row 22 includes N second battery cells 12, that is, the N second battery cells 12 are arranged in a row in the second direction F2. The length of the first battery cell 11 is greater than a sum of lengths of N-1 second battery cells 12.

Therefore, in the second battery row 22, the second battery cells 12 are connected to the same first battery cell 11, to ensure that the first battery cell 11 can connect the second battery rows 22 into one piece. When the length of the first battery cell 11 is greater than or equal to a sum of lengths of the N second battery cells 12, connection lengths of the N second battery cells 12 are equal to the length of the first battery cell 11 and each are equal to the length of the second battery cell 12, thereby ensuring connection uniformity of the N second battery cells 12.

In some embodiments, as shown in FIGS. 7 and 8, the at least two second battery rows 22 are arranged on the same side of the first battery cell 11 in the first direction F1, and the at least two second battery rows 22 are stacked in the third direction F3. That is to say, the first battery cell 11 is adjacent to the at least two second battery rows 22 at the same side thereof, and the first battery cell 11 can be connected to all adjacent second battery rows 22, to connect second battery rows of the at least two second battery rows 22 located on the same side of the first battery cell 11 into one piece, thereby improving the overall rigidity.

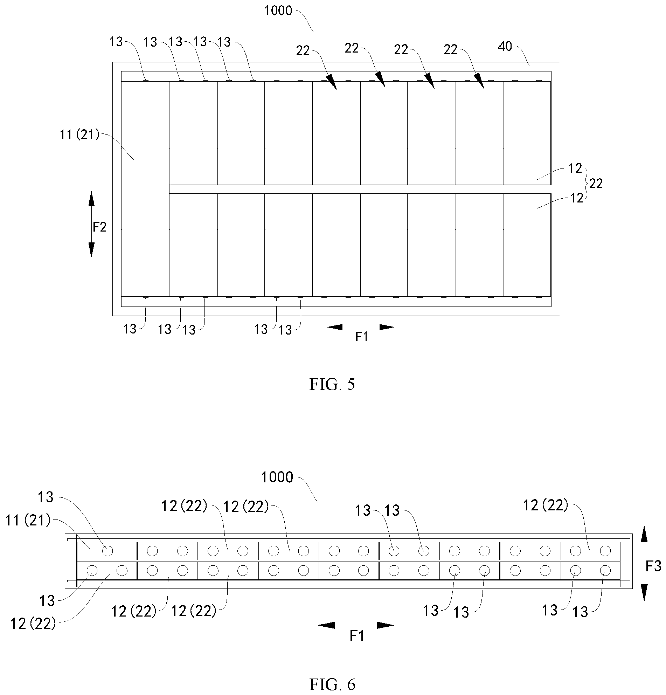

In some embodiments, as shown in FIGS. 5 and 6, the first battery cell 11 is provided with the second battery row 22 on at least one side thereof in the first direction F1 and on at least one side thereof in the third direction F3, respectively. That is, the first battery cell 11 is adjacent to the second battery row 22 at two sides thereof, respectively, and the first battery cell 11 is connected to all the adjacent second battery rows 22, to connect the second battery rows of the at least two second battery rows 22 located on the two sides together, thereby improving the overall rigidity.

Further, at least one second battery row 22 may be stacked on the same side of the first battery cell 11 in the first direction F1, and at least one second battery row 22 may be stacked on the same side of the first battery cell 11 in the third direction F3. In this way, the first battery cell 11 can be respectively connected to a plurality of the second battery rows 22 from two sides, thereby connecting more second battery rows 22 together to further improve the overall rigidity.

For example, in the specific embodiment shown in FIGS. 5 and 6, the first battery cell 11 is connected to one second battery row 22 on a side thereof in the first direction F1, and is connected to one second battery row 22 on a side thereof in the third direction F3. For another example, in the embodiment shown in FIGS. 7 and 8, the first battery cell 11 is connected to two second battery rows 22 on a side thereof in the first direction F1, and the two second battery rows 22 are stacked in the third direction F3.

In some embodiments in which the length directions of the first battery cell 11 and the second battery cell 12 are parallel, as shown in FIGS. 2 to 8, the thickness direction of the second battery cell 12 and the thickness direction of the first battery cell 11 may be parallel or perpendicular to each other.

As shown in FIGS. 2 to 6, the thickness direction of the second battery cell 12 is parallel to the thickness direction of the first battery cell 11, such that after the at least one first battery cell 11 and the second battery cells 12 are stacked, the structure is compact and the occupied space is small. Moreover, in an embodiment where a pressure relief portion 14 is provided, it is beneficial to arrange the pressure relief portion 14 on a narrow surface such as a surface on a side in the width direction, which is not prone to be deformed. Accordingly, installation of the pressure relief portion 14 is reliable, and the pressure relief portion 14 is not prone to deformation, and thermal runaway caused by pressure relief toward the adjacent battery cell 10 can be avoided.

As shown in FIGS. 7 and 8, the thickness direction of the second battery cell 12 is perpendicular to the thickness direction of the first battery cell 11. Thus, the arrangement directions of the first battery cell 11 and the second battery cell 12 are different, thereby increasing the overall rigidity of the battery 1000.

According to some embodiments of the present application, as shown in FIGS. 1 to 8, the first battery cell 11 is provided with an electrical connection portion 13 on two sides thereof in the length direction, respectively. For example, a positive electrode terminal and a negative electrode terminal are provided on the two sides of the first battery cell, respectively. The second battery row 22 is provided with the electrical connection portion 13 on two sides thereof in the length direction, respectively, and one or two electrical connection portion 13 is located on the same side of the second battery row 22.

In addition, the electrical connection portion 13 on a side of the second battery row 22 and one electrical connection portion 13 of the first battery cell 11 are connected by an electrical connection member. The electrical connection portion 13 on another side of the second battery row 22 and another electrical connection portion 13 of the first battery cell 11 are connected by an electrical connection member. The electrical connection member is used for realizing the electrical connection of two electrical connection portions 13, for example, the electrical connection member may be a busbar sheet.

The electrical connection part 13 on a side of the second battery row 22 is connected with one electrical connection portion 13 of the first battery cell 11, and the electrical connection portion 13 on another side of the second battery row 22 is connected with another electrical connection portion 13 of the first battery cell 11. In this way, the first battery cell 11 has an electrical connection switching function, and the electrical connection of the electrical connection portions 13 on two sides of the second battery row 22 can be realized without additionally providing a component, such as a busbar sheet.

For example, if the electrical connection portions 13 on two sides of the second battery row 22 are connected by the busbar sheet, the busbar sheet is required to extend from a side to another side in the second direction F2, and the busbar sheet and the second battery row 22 are stacked in the first direction F1 or the third direction F3, which occupies an additional space. Therefore, the first battery cell 11 with a relatively long length is used for transfer-connection to save the space for additionally arranging the busbar sheet, increase the space utilization rate of the interior of the battery 1000, and facilitate to reduce the dimension of the battery 1000. Moreover, the number of components is reduced, and the cost is reduced.

In some embodiments where a plurality of the second battery rows 22 is provided, the electrical connection portions 13 located on the same side of the plurality of second battery rows 22 can be electrically connected through the electrical connection member, to realize serial or parallel connection of the plurality of second battery rows 22. Moreover, the electrical connection member does not need to arrange across the second battery rows 22 in the second direction F2, which can reduce the spaces occupied in the first direction F1 and the third direction F3, and the dimension of the electrical connection member is relatively small, thereby achieving the compact structure and increasing the space utilization rate.

In the embodiments of the present application, the electrical connection portion 13 of the second battery row 22 may be flexibly arranged.

For example, as shown in FIG. 1 to FIG. 3 and FIG. 5 to FIG. 8, each of the second battery rows 22 includes two second battery cells 12, sides of the two second battery cells 12 facing away from each other are provided with the electrical connection portions 13. That is, the positive electrode terminal and the negative electrode terminal of each of the second battery cells 12 are disposed on the same side, and are disposed on two sides facing away from each other for each of the two second battery cells 12. Thus, the positive electrode terminal and the negative electrode terminal can be electrically connected on the same side and dissipate heat from the same side, and the mounting space is shared with the heat dissipation space, such that the structure is more compact.

In another embodiment, as shown in FIG. 4, the second battery rows 22 each include at least two second battery cells 12, and each of the two second battery cells 12 is provided with the electrical connection portion 13 on two sides thereof in the length direction, respectively. For example, the second battery cell 12 is provided with a positive electrode terminal and a negative electrode terminal on the two sides, respectively. The electrical connection portions 13 of two adjacent ones of the second battery cells 12 that are opposite to each other are connected, for example, connected by directly welding, electrically connected by an adapter or the like.

The electrical connection portions 13 of the two second battery cells 12 of the same second battery row 22 are directly connected. In this way, in one aspect, the electrical connection portions 13 can support the two second battery cells 12 in the second direction F2, such that the overall structural strength of the second battery rows 22 can be improved, and the structures such as the busbar sheet and the adapter can be omitted, which save the space. In another aspect, the electrical connection of the two second battery cells 12 can be achieved to achieve serial or parallel connection of the battery cells 10 in the same second battery row 22, and the electric connection structure is located in the middle of the battery 1000, such that the electric connection structure can be prevented from being directly collided during side collision.

It should be noted that in the embodiments of the present application, the battery cell 10 may be a hard-housing battery cell or a soft-pack battery cell. The electrode terminals of the hard-housing battery cell each have a columnar structure and a relatively strong strength, can be directly abutted, and provide supporting and position-limiting functions. The electrode terminals of the soft package battery cell each can have a sheet-shaped structure, and the opposing electrode terminals can be stacked to be directly connected, thereby occupying a smaller space.

In the embodiment where the second battery row 22 includes the plurality of second battery cells 12, the number of the plurality of second battery cells 12 may be in a range of 2 to 5, to avoid the overall dimension of the battery 1000 from being too large due to the excessive second battery cells 12.

According to some embodiments of the present application, at least one of the battery cells 10 is a battery cell without a discharging platform. In a discharging curve of the at least one battery cell without the discharging platform, within a discharging capacity interval of 5% to 95%, each 5% discharging capacity is a value point, and a slope of a connecting line of two adjacent value points is greater than or equal to 1.

The discharging curve is a test curve of a voltage (OCV) and a discharging capacity (SOC) during a discharging process of the battery cell 10.

In the discharging capacity interval of 5% to 95%, each 5% discharging capacity is a value point, and the slope of the connecting line of the two adjacent value points in the discharging curve is greater than or equal to 1. Each 5% discharging capacity is a value point, which means that positions of the discharging capacities of 5%, 10%, 15%, 20%...... 85%, 90% and 95% are all taken as value points. The connecting line of the two adjacent value points is a line segment, for example, a line segment obtained by connecting a value point corresponding to the discharging capacity of 5% and a value point corresponding to the discharging capacity of 10% on the discharging curve.

The larger the slope of the connecting line is, the faster the voltage change during the discharging is, and the easier to identify a relationship between the SOC and the OCV is, such that it is easy to obtain a current SOC of the battery cell 10 based on a detected OCV. When the slope of the connecting line is relatively small, the discharging curve forms a discharging platform, that is, a corresponding OCV is approaching in an SOC range, thereby making it difficult to obtain an actual SOC of the battery cell 10 based on the detected OCV.

Therefore, when the slope of the connecting line of every two adjacent value points is greater than or equal to 1, the discharging curve has an obvious SOC curve radian. In this way, the discharging curve of the battery cell 10 does not have a discharging platform, and the corresponding battery cell 10 is a battery cell without a discharging platform. When the slope of the connecting line of every two adj acent value points is smaller than 1, the discharging curve has an obvious platform curve. In this way, a discharging platform exists in the discharging curve of the battery cell 10, and the corresponding battery cell 10 is a battery cell with a discharging platform.

At least one battery cell 10 is a battery cell without a discharging platform, such that an overall discharging curve of the battery 1000 does not have a discharging platform. Therefore, in the using process of the battery 1000, the discharging capacity of the battery 1000 can be accurately obtained based on a detected voltage, that is, a residual electric quantity is accurately obtained, thereby avoiding electric quantity suddenly drop.

In some embodiments, at least one battery cell 10 is a battery cell with a discharging platform, and a slope of a discharging connecting line of every two adjacent value points of the battery cell with the discharging platform is smaller than 1.

That is, the battery 1000 combines the at least one battery cell without the discharging platform and the at least one battery cell with the discharging platform, such that the detection accuracy of the discharging capacity is improved through the at least one battery cell without the discharging platform, and the capacitance can be improved through the at least one battery cell with the discharging platform, to improve an endurance ability of the battery 1000.

In some specific embodiments, the first battery cell 11 is a battery cell with a discharging platform, and the second battery cell 12 is a battery cell without a discharging platform. Compared with the battery cell without the discharging platform, the first battery cell with the discharging platform is better in safety, and the first battery cell 11 having a relatively long length is a safer battery cell with a discharging platform, thereby facilitating to ensure the safety and stability of the first battery cell 11, and ensure that the first battery cell 11 can provide a more reliable structural stability for the second battery cell 12 and the entire battery 1000.

In some embodiments of the present application, thermal runaway temperature thresholds of at least two battery cells 10 are not equal. Thermal runaway temperature threshold, i.e., when a temperature is lower than the threshold, the battery cell 10 will not be subjected to thermal runaway. When the temperature is higher than the thermal runaway temperature threshold, the risk that thermal runaway occurs is extremely high. In two battery cells 10 having different thermal runaway temperature thresholds, when thermal runaway occurs in one of the two battery cells 10 with a relatively low thermal runaway temperature threshold, the temperature is lower than a thermal runaway temperature threshold of another one of the two battery cells 10 with the relatively high thermal runaway temperature threshold. That is, thermal runaway will not occur on the battery cell 10 with the relatively high thermal runaway temperature threshold at this temperature to form a thermal insulation barrier, thereby avoiding rapid diffusion of heat during thermal runaway.

In some embodiments, the battery cells 10 having the relatively low thermal runaway temperature is located on two sides of the battery cell 10 having the relatively high thermal runaway temperature, thereby separating the battery cells 10 having the relatively low thermal runaway temperature to avoid a thermal runaway chain reaction.

In some embodiments, a thermal runaway temperature threshold of the first battery cell 11 is higher than a thermal runaway temperature threshold of the second battery cell 12. That is, the first battery cell 11 with the relatively long length is less prone to thermal runaway than the second battery cell 12 with the relatively short length, the stability and safety of the first battery cell 11 are higher to ensure a more reliable structure enhancement effect, satisfy large-dimension machining requirements, and reduce the machining difficulty. Moreover, a blocking effect of the relatively long length on heat is better, and an effect of preventing thermal runaway diffusion thereof is better.

In some embodiments, a thermal runaway temperature threshold difference between the relatively high thermal runaway temperature threshold of the battery cell 10 and the relatively low thermal runaway temperature threshold of the another battery cell 10 is greater than or equal to 20 °C, to avoid that the temperature achieves the thermal runaway temperature threshold of the battery cell 10 having a relatively high thermal runaway temperature threshold due to heat accumulation, thereby avoiding further diffusion of thermal runaway.

In some specific embodiments, the first battery cell 11 is a lithium iron phosphate battery cell (LFP battery cell), and the second battery cell 12 is a ternary battery cell (such as, a nickel-manganese-cobalt NCM battery cell). A discharging curve of the lithium iron phosphate battery cell has an obvious discharging platform, and a discharging curve of a ternary system has an obvious curve radian. Moreover, the lithium iron phosphate battery cell has a thermal runaway temperature threshold higher than that of the ternary battery cell and thus has relatively high safety. The ternary battery cell is better in capacity and higher in endurance ability.

The lithium iron phosphate battery cell and the ternary battery cell are combined such that the detection accuracy of the discharging capacity can be improved, the endurance ability of the battery 1000 can be improved, and the overall safety and reliability of the battery 1000 can be improved. Moreover, the first battery cell 11 has only one specification, and the second battery cell 12 has only one specification, to avoid the battery cells 10 with the same appearance from employing different chemical systems to cause error assembling.

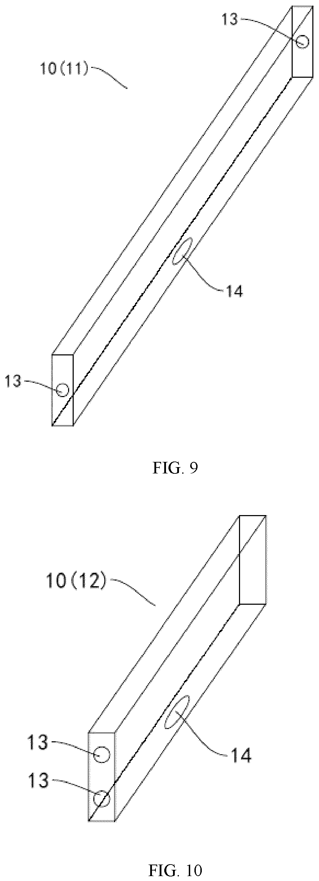

According to some embodiments of the present application, as shown in FIGS. 9 to 11, the battery cell 10 is provided with a pressure relief portion 14 and an electrical connection portion 13. When an internal pressure of the battery cell 10 is too high, such as thermal runaway, the pressure relief portion 14 is used for releasing internal substances (such as, gas, liquid, and particles) of the battery cell 10, to reduce the internal pressure of the battery cell 10 and avoid dangerous accidents such as deflagration of the battery cell 10 due to too fast pressurization inside the battery cell 10. For example, the pressure relief portion 14 may be an explosion-proof valve, an explosion-proof sheet and the like.

In addition, the pressure relief portion 14 and the electrical connection portion 13 are disposed on different sides of the battery cell 10. It is beneficial to ensure that there is a relatively large spacing between the electrical connection portion 13 and the pressure relief portion 14 of the battery cell 10, to effectively avoid problems of insulation failure, highpressure ignition, initiation of fire explosion and the like caused by the fact that conductive particles in emissions discharged by the battery cell 10 through its pressure relief portion 14 flow to the electrical connection portion 13 of the battery cell 10 under conditions of thermal runaway and the like.

In some embodiments, as shown in FIGS. 9 to 11, the battery cell 10 has two first surfaces opposite to each other in the length direction, two second surfaces opposite to each other in the width direction, and two third surfaces opposite to each other in the thickness direction.

As shown in FIG. 9, two electrical connection portions 13 of the first battery cell 11 are respectively arranged on the two first surfaces, and a pressure relief portion 14 is arranged on one of the two second surfaces. As shown in FIG. 10, two electrical connection portions 13 of the second battery cell 12 are arranged on the same one of the two first surfaces, and a pressure relief portion 14 is arranged on one of the two second surfaces. In other words, the electrical connection portions 13 and the pressure relief portion 14 are located on adjacent sides of the battery cell 10, respectively, such that a safe distance is provided between the pressure relief portion 14 and each of the two electrical connection portions 13, thereby reducing influence of emissions discharged by the pressure relief portion 14 on the electrical connection portions 13 and improving the using safety and reliability of the battery 1000. Moreover, the pressure relief portion 14 is arranged on a narrow surface of the battery cell 10 that is not prone to be deformed, which can ensure the mounting stability of the pressure relief portion 14.

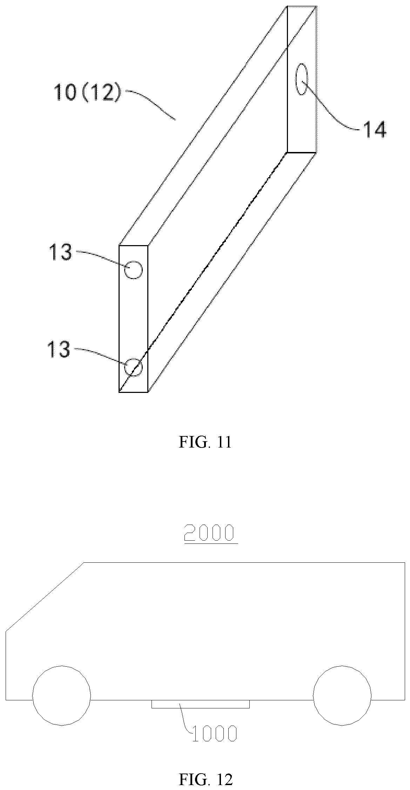

As shown in FIG. 11, two electrical connection portions 13 of the second battery cell 12 are arranged on one of the two first surfaces, and a pressure relief portion 14 is arranged on another one of the two first surfaces. In other words, the pressure relief portion 14 and each of the two electrical connection portions 13 are provided on two opposite side surfaces of the battery cell 10, respectively. Therefore, the distance between the pressure relief portion 14 and each of the two electrical connection portions 13 can be further increased, to ensure that the electrical connection portions 13 are not influenced by the emissions discharged by the pressure relief portion 14, that is, probability of the influence is less. Accordingly, the use safety and reliability of the battery 1000 are better.

In some specific embodiments, as shown in FIGS. 1 to 8, the pressure relief portion 14 of the first battery cell 11 is disposed on the second surface. The width direction of the first battery cell 11 is parallel to the third direction F3, and the first battery cell 11 is of a single layer in the third direction F3. In another embodiment, the first battery cell 11 is located on the same side of all the second battery cells 12 in the first direction F1, the width direction of the first battery cell 11 is parallel to the first direction F1, and the pressure relief portion 14 is disposed on the second surface of the first battery cell 11 facing away from the second battery cell 12.

The pressure relief portion 14 of the second battery cell 12 is arranged on the second surface, the width direction of the second battery cell 12 is parallel to the third direction F3, and the second battery cell 12 is of a single layer in the third direction F3. In another embodiment, the pressure relief portion 14 of the second battery cell 12 is arranged on the first surface, the first surfaces of two adjacent second battery cells 12 of the same second battery row 22 that are provided with the pressure relief portions 14 are opposite to each other, and a beam is provided between the two second battery cells 12. The beam is provided with a heat dissipation channel, and the pressure relief portion 14 sprays toward the heat dissipation channel to discharge a high-temperature gas through the heat dissipation channel.

Therefore, the second surface of the first battery cell 11 with the pressure relief portion 14 is not opposite to all the other battery cells 10, and the surface of the second battery cell 12 with the pressure relief portion 14 is not directly opposite to the other battery cells 10. The pressure relief portion 14 neither sprays toward any electrical connection portion 13 nor toward the housings of the other battery cells 10. Accordingly, the electrical connection portions 13 of each battery cell 10 can be effectively prevented from being affected by the emissions discharged by the other battery cells 10, thereby ensuring the using safety and reliability of the battery 1000.

The electric device 2000 according to an embodiment of the second aspect of the present application includes the battery 1000 according to the embodiments of the first aspect of the present application, and the battery 1000 is used for providing electric energy for the electric device 2000. Therefore, the battery 1000 described above is provided to improve the using safety and reliability of the electric device 2000.

In an embodiment, as shown in FIG. 12, when the battery 1000 is used in a vehicle, the battery 1000 may be disposed at bottom, head, or tail of the vehicle. The battery 1000 may be used for power supply of the vehicle, for example, the battery 1000 may be used as an operating power source for the vehicle. The vehicle may include a controller and a motor, and the controller is used for controlling the battery 1000 to supply power to the motor, for example, to provide operating power demands during starting, navigating, and driving of the vehicle.

The battery 1000 according to some specific embodiments of the present application and a vehicle provided with the battery 1000 are described below with reference to the drawings.

As shown in FIG. 12, the battery 1000 is arranged on a underframe of the vehicle. As shown in FIGS. 1 to 11, the battery 1000 includes a case 40 and a plurality of battery cells 10 arranged in the case 40, and the plurality of battery cells 10 includes a first battery cell 11 and a second battery cell 12. A length of the first battery cell 11 is greater than a length of the second battery cell 12, and the first battery cell 11 and the second battery cell 12 have the same width and thicknesses. The first battery cell 11 is an LFP battery cell, a discharging curve of which has an obvious discharging platform and a thermal runaway temperature threshold of which is relatively high. The second battery cell 12 is an NCM battery cell, a discharging curve of which has an obvious curve radian and a thermal runaway temperature threshold of which is relatively low. The first battery cell 11 is provided with a positive electrode terminal and a negative electrode terminal on two sides thereof in the length direction, respectively.

A third direction F3 is an upright direction, a first direction F1 is a left-right horizontal direction, and a second direction F2 is a front-rear horizontal direction. When a thickness direction of the battery cell 10 is parallel to the third direction F3, the battery cell 10 employs a lying configuration. When a width direction of the battery cell 10 is parallel to the third direction F3, the battery cell 10 employs an upright configuration.

In a first embodiment as shown in FIG. 1, 64 second battery cells 12 are formed as 32 second battery rows 22 arranged in the first direction F1, and each of the second battery rows 22 includes two second battery cells 12 arranged in the second direction F2, such that the 64 second battery cells 12 are formed as two rows distributed in front and at back. The second battery cells 12 each have the upright configuration and have a thickness direction parallel to the first direction F1. A first battery cell 11 is of the upright configuration, a length direction of the first battery cell 11 is parallel to the first direction F1, and a thickness direction of the first battery cell 11 is parallel to the second direction F2. The first battery cell 11 is located between the front row of second battery cells 12 and the rear row of second battery cells 12, to function as a barrier during thermal runaway to separate the second battery cells 12 with a relatively low thermal runaway temperature and avoid rapid heat diffusion during thermal runaway. The first battery cell 11 also functions as a reinforcing beam, such that the rigidity of the whole battery 1000 is greatly improved.

In a second embodiment shown in FIGS. 2 and 3, the second embodiment is different from the first embodiment in that the length direction of the first battery cell 11 is parallel to the second direction F2 and the thickness direction thereof is parallel to the first direction F1. The first battery cell 11 and 32 second battery rows 22 are stacked along the first direction F1, such that the first battery cell 11 can connect two second battery cells 12 of an adjacent second battery row 22 together to achieve an effect of enhancing the structure. In addition, the first battery cell 11 is respectively provided with an electrode terminal on two sides thereof, and the second battery cells 12 each are provided with a double-electrode terminal on a side thereof, such that the first battery cell 11 has current-leading and adapting functions.

In a third embodiment as shown in FIG. 4, the third embodiment is different from the second embodiment in that three first battery cells 11 are provided to be formed as two first battery rows 21. One of the two first battery rows 21 includes one first battery cell 11, and another one of the two first battery rows 21 includes two first battery cells 11. Each of the two first battery rows 21 is located between two adjacent second battery rows 22. The first battery row 21 is arranged between the two second battery rows 22 to function as a reinforcing beam, such that the effect of improving the structural strength is better, and a thermal buffering effect can be achieved to avoid rapid diffusion of heat. Each of the second battery rows 22 includes three second battery cells 12 arranged in the second direction F2, each of the three second battery cells 12 is respectively provided with an electrode terminal on two sides thereof, and any two adjacent second battery cells 12 are connected by the connection of the electrode terminals.

In a fourth embodiment as shown in FIGS. 5 and 6, the first battery cell 11 and the second battery cell 12 both have the lying configuration, and the length directions thereof are parallel to the second direction F2. Thirty-four second battery cells 12 are formed as seventeen second battery rows 22, in which sixteen second battery rows of the seventeen second battery rows 22 are arranged in two layers in the third direction F3 and each layer includes eight second battery rows 22 arranged in the first direction F1, and the seventeenth second battery row 22 and the first battery cell 11 are stacked in the third direction F3 and located on a side of the sixteen second battery rows 22 in the first direction F1.

In a fifth embodiment as shown in FIGS. 7 and 8, the first battery cell 11 is configured to be upright and the length direction thereof is parallel to the second direction F2. The second battery cell 12 has the lying configuration and the length direction thereof is parallel to the second direction F2. Thirty-two second battery cells 12 are formed as sixteen second battery rows 22, which are arranged in two layers in the third direction F3. Each layer of the second battery rows 22 includes eight second battery rows 22 arranged in the first direction F1. Four first battery cells 11 are stacked in the first direction F1 and located on the same side of the sixteen second battery rows 22 in the first direction F1.

In a sixth embodiment of the present application, the same structure of the sixth embodiment as the fourth embodiment is in that the first battery cell 11 and one second battery row 22 are stacked in the third direction F3, but the sixth embodiment is different from the fourth embodiment in that all remaining second battery rows 22 are of the upright configuration and are stacked in the first direction F1.

The first battery cell 11 and the second battery cell 12 are connected, such that after the plurality of battery cells 10 are assembled into the battery 1000, the strength and stability of the whole battery 1000 can be improved to prevent the battery cells 10 from being damaged and avoid the safety risk.

It should be noted that, in the case of no conflict, the embodiments in the present application and the features in the embodiments can be combined with each other.

The above description is only the preferred embodiments of the present application and not used for limiting the present application, and it is apparent for those skilled in the art that the present application can have various changes and modifications. Any modification, equivalent replacement, improvement, and the like made within the spirit and principle of the present application should be included within the scope of the present application.

## Claims

1. A battery (1000), comprising a plurality of battery cells (10), the plurality of battery cells (10) comprising:
at least one first battery cell (11) and at least one second battery cell (12), a length of the first battery cell (11) being greater than a length of the second battery cell (12), and the first battery cell (11) being adjacent to and connected to the second battery cell (12).

2. The battery (1000) according to claim 1, wherein the first battery cell (11) comprises a plurality of the first battery cells (11) formed as at least one first battery row (21), the first battery row (21) comprising one first battery cell (11) or a plurality of the first battery cells (11) stacked in a thickness direction.

3. The battery (1000) according to claim 1 or 2, wherein the second battery cell (12) comprises a plurality of the second battery cells (12), the first battery cell (11) being connected to at least two second battery cells (12).

4. The battery (1000) according to claim 3, wherein the plurality of second battery cells (12) is formed as a plurality of second battery rows (22), each of the second battery rows (22) comprising a plurality of the second battery cells (12) arranged in a length direction of the second battery cell (12); and
the first battery cell (11) is connected to the plurality of second battery cells (12) of the same second battery row (22), and/or the first battery cell (11) is connected to at least two second battery rows (22).

5. The battery (1000) according to claim 4, wherein at least two second battery rows (22) are arranged in a first direction (F1), the length direction of the second battery cell (12) is a second direction (F2) perpendicular to the first direction (F1); and
the at least one first battery cell (11) has a length direction parallel to the first direction (F1), and is located between two adjacent second battery cells (12) of the plurality of second battery rows (22).

6. The battery (1000) according to claim 5, wherein M two second battery rows (22) are arranged in the first direction (F1) is M, and the length of the first battery cell (11) is greater than a total dimension of M-1 second battery rows (22) in the first direction (F1).

7. The battery (1000) according to claim 5 or 6, wherein a thickness direction of the first battery cell (11) is parallel to the second direction (F2); and
wherein:
a thickness direction of the second battery cell (12) is parallel to the first direction (F1); or
a thickness direction of the second battery cell (12) is parallel to a third direction (F3), the first direction (F1) and the second direction (F2) being both perpendicular to the third direction (F3), and at least two second battery rows (22) are stacked in the third direction (F3) and are connected to an adjacent one of the at least one first battery cells (11).

8. The battery (1000) according to claim 4, wherein:
the length direction of the second battery cell (12) is a second direction (F2), a length direction of the at least one first battery cell (11) being parallel to the second direction (F2); and
the first battery cell (11) and the second battery row (22) are stacked and connected to each other in a first direction (F1) or a third direction (F3), the first direction (F1), the second direction (F2), and the third direction (F3) being perpendicular to each other.

9. The battery (1000) according to claim 8, wherein the second battery row (22) comprises N second battery cells (12), and the length of the first battery cell (11) is greater than a total length of N-1 second battery cells (12).

10. The battery (1000) according to claim 8 or 9, wherein:
at least two second battery rows (22) are arranged on the same side of the at least one first battery cell (11) in the first direction (F1), and the at least two second battery rows (22) are stacked in the third direction (F3); and/or
the second battery rows (22) are arranged on at least one side of the first battery cell (11) in the first direction (F1) and on at least one side of the first battery cell (11) in the third direction (F3), respectively.

11. The battery (1000) according to any one of claims 8 to 10, wherein a thickness direction of the second battery cell (12) is parallel to or perpendicular to a thickness direction of the first battery cell (11).

12. The battery (1000) according to any one of claims 4 to 11, wherein the first battery cell (11) is provided with an electrical connection portion (13) on each of two sides of the first battery cell (11) in a length direction of the first battery cell, and the second battery row (22) is provided with an electrical connection portion (13) on each of two sides of the second battery row (22) in a length direction of the second battery row (22);
the electrical connection portion (13) arranged on one of the two sides of the second battery row (22) is connected to one of the electrical connection portions (13) of the first battery cell (11) through an electrical connection member; and
the electrical connection portion (13) arranged on another one of the two sides of the second battery row (22) is connected to another one of the electrical connection portions (13) of the first battery cell (11) through an electrical connection member.

13. The battery (1000) according to claim 12, wherein:
the second battery row (22) comprises two second battery cells (12), the two second battery cells (12) being provided with the electrical connection portions (13) on two sides thereof facing away from each other, respectively; or
the second battery row (22) comprises at least two second battery cells (12), each of the second battery cells (12) is provided with the electrical connection portion (13) on each of two sides thereof in the length direction of the second battery cell (12), the electrical connection portions (13), opposite to each other, of two adjacent two second battery cells (12) being connected to each other.

14. The battery (1000) according to any one of claims 1 to 13, wherein:
at least one battery cell (10) is a battery cell without a discharging platform;
in a discharging curve of the battery cell without the discharging platform, within a discharging capacity interval of 5% to 95%, each discharging capacity of 5% being a value point; and
a slope of a connecting line of two adjacent value points is greater than or equal to 1.

15. The battery (1000) according to claim 14, wherein at least one battery cell (10) is a battery cell with a discharging platform, a slope of a connecting line of two adjacent value points in a discharging curve of the battery cell with the discharging platform being smaller than 1.

16. The battery (1000) according to claim 15, wherein:
the first battery cell (11) is the battery cell with the discharging platform; and
the second battery cell (12) is the battery cell without the discharging platform.

17. The battery (1000) according to any one of claims 1 to 16, wherein at least two of the plurality of battery cells (10) have different thermal runaway temperature thresholds.

18. The battery (1000) according to claim 17, wherein a thermal runaway temperature threshold of the first battery cell (11) is higher than a thermal runaway temperature threshold of the second battery cell (12).

19. The battery (1000) according to any one of claims 1 to 18, wherein:
the first battery cell (11) is a lithium iron phosphate battery cell; and
the second battery cell (12) is a ternary battery cell.

20. The battery (1000) according to any one of claims 1 to 19, wherein the battery cell (10) is provided with a pressure relief portion (14) and an electrical connection portion (13), the pressure relief portion (14) and the electrical connection portion (13) being arranged on different sides of the battery cell (10).

21. An electric device (2000), comprising the battery (1000) according to any one of claims 1 to 20, wherein the battery (1000) is configured to provide electric energy to the electric device (2000).
